(19) **Europäisches Patentamt**

**European Patent Office**

**Office européen des brevets**

(11) **EP 0 625 720 B1**

(12) **EUROPEAN PATENT SPECIFICATION**

(45) Date of publication and mention
of the grant of the patent:
**15.03.2000 Bulletin 2000/11**

(21) Application number: **92923560.4**

(22) Date of filing: **16.11.1992**

(51) Int. Cl.$^7$: **G02F 1/133**, G02F 1/1333,
F21V 9/10

(86) International application number:
**PCT/JP92/01492**

(87) International publication number:
**WO 94/11775 (26.05.1994 Gazette 1994/12)**

(54) **LIQUID CRYSTAL DEVICE AND ITS DRIVING METHOD, LIQUID CRYSTAL APPARATUS AND ILLUMINATING APPARATUS**

FLÜSSIGKRISTALLVORRICHTUNG UND METHODE ZU SEINER ANSTEUERUNG, FLÜSSIGKRISTALLGERÄT UND BELEUCHTUNGSEINRICHTUNG

DISPOSITIF A CRISTAUX LIQUIDES ET SON PROCEDE D'EXCITATION, APPAREIL A CRISTAUX LIQUIDES ET APPAREIL D'ECLAIRAGE

(84) Designated Contracting States:
**DE FR GB IT**

(30) Priority: **13.11.1992 JP 30388292**

(43) Date of publication of application:
**23.11.1994 Bulletin 1994/47**

(73) Proprietor: **NIPPON HOSO KYOKAI**
**Tokyo (JP)**

(72) Inventors:
 • **TAKIZAWA, Kuniharu**
 **Kinuta 1-chome Setagaya-ku Tokyo 157 (JP)**
 • **FUJIKAKE, Hideo**
 **Kinuta 1-chome Setagaya-ku Tokyo 157 (JP)**
 • **HIRABAYASHI, Tsunehiro**
 **Shibuya-ku Tokyo 150-01 (JP)**
 • **TANAKA, Yoshiaki**
 **Nippon Hoso Kyokai Hoso Center**
 **Shibuya-ku Tokyo 150-01 (JP)**
 • **TAKATA, Kensaku**
 **Osaka Works, Sumitomo El.Ind.Ltd.**
 **Osaka-shi Osaka 554 (JP)**
 • **TAKANO, Satoshi**
 **Osaka Works, Sumitomo El.Ind.Ltd.**
 **Osaka-shi Osaka 554 (JP)**
 • **KASHIWAGI, Tohru**
 **Osaka Works, Sumitomo El.Ind.Ltd**
 **Osaka-shi Osaka 554 (JP)**

(74) Representative:
**Herrmann-Trentepohl, Werner, Dipl.-Ing. et al**
**Patentanwälte**
**Herrmann-Trentepohl**
**Grosse - Bockhorni & Partner**
**Forstenrieder Allee 59**
**81476 München (DE)**

(56) References cited:
| | |
|---|---|
| **EP-A- 0 473 090** | **WO-A-92/10130** |
| **JP-A- 1 130 195** | **JP-A- 3 092 820** |
| **JP-A- 62 009 320** | **JP-A- 63 189 837** |
| **JP-T- 1 501 255** | **JP-T- 61 502 128** |
| **JP-T- 63 501 512** | **US-A- 4 878 741** |
| **US-A- 5 004 323** | |

• **PATENT ABSTRACTS OF JAPAN vol. 13, no. 324 (P-903) (3672) & JP-A-01 091 125 (UBE IND) 10 April 1989**
• **PATENT ABSTRACTS OF JAPAN vol. 14, no. 4 (P-986) & JP-A-01 255 832 (UBE IND) 12 October 1989**
• **JOURNAL OF APPLIED PHYSICS., vol.65, no.15, June 1989, NEW YORK US pages 5043 - 5050 N.VAZ 'Dual frequency addressing of polymer-dispersed..'**

## Description

### BACKGROUND OF THE INVENTION

#### Field of the Invention

The present invention relates to liquid crystal devices for adjustment of light, a driving method thereof, a liquid crystal apparatus with a function of adjustment of light for use in a light adjusting window, a display or the like, various illuminations and indoor illuminations incorporating such a liquid crystal apparatus, and an illumination apparatus with a function of adjustment of light for use in illuminations for television or movie filming and photographing, or for a projecting type television receiver, a projector, a slide projector or the like.

#### Description of the Related Art

A liquid crystal device using materials such as twisted nematic liquid crystal, super twisted nematic liquid crystal and ferroelectric liquid crystal needs a polarizer which causes loss of more than 50% of unpolarized light, and when a liquid crystal device using any of the above-described materials is used for a light-adjusting element for an illumination apparatus using a light source irradiating a high-power light, large development of the polarizer's temperature due to absorbance of light is inevitable.

In contrast, a liquid crystal device in which a composite film in which a liquid crystal material fills a series of pores in a film forming a transparent matrix having a three dimensional network structure or in which a liquid crystal material is dispersed in particles in a film forming a transparent matrix sandwiched between transparent substrates having a pair of transparent conductive films does not require any polarizer, and therefore the above-described disadvantage is overcome.

In the above-described liquid crystal device, since when no voltage is applied liquid crystal molecules are in a random state based on the configuration of the interface between the liquid crystal molecules and the transparent matrix (anchoring effect), and incident light is scattered and the composite film shows an opaque state. When voltage (usually a rectangular wave or a sinusoidal wave of about 200Hz) is applied to the region between the transparent substrates having the pair of transparent conductive films with the composite film held therebetween, liquid crystal molecules having positive dielectric anisotropy ($\Delta\epsilon$) are oriented in the direction of electric field and gradually come into order increasing light transmittance, an electrooptic effect is brought about, and a transparent state results. Note that the term "transmittance" indicates the ratio of power of light emitted from an element relative to power of light incident to the element, but in the case of a light-scattering type liquid crystal device, the term indicates the ratio of power of light emitted in the range of a certain angle to power of a collimated light incident to the element. The angle may be determined depending upon the condition for using of the element. Herein, light transmitted within the range of the angle is referred to as non-scattered light.

In a conventional liquid crystal device using any materials, however, the dependence of birefringence of liquid crystal on wavelength basically causes the spectrum of transmitted light to change depending upon the state of applied voltage, and the spectrum of transmitted light largely fluctuates particularly in a middle state between the opaque state and the transparent state.

Also in the above-described liquid crystal device using the composite film, the relation between light transmittance in each wavelength and applied voltage is not constant in a middle state between the opaque state and the transparent state, the transmittance at the same voltage largely fluctuates depending upon the wavelength, particularly the light transmittance is larger on the side of longer wavelengths than on the side of shorter wavelengths, and therefore the spectrum of transmitted light largely fluctuates depending upon applied voltage. Furthermore, the ratio of transmittance of each wavelength changes depending upon applied voltage, and therefore the color tone of transmitted light also changes with change of the applied voltage.

From study for the cause, the following has been found out.

More specifically, when voltage is applied to a liquid crystal device, liquid crystal molecules are oriented in the direction of electric field as described above, but the intensity of electric field is not enough in the middle state between the opaque state and the transparent state, and therefore the orientation of liquid crystal molecules is disturbed by said anchoring effect in the vicinity of the interface of the liquid crystal molecules and the transparent matrix. Accordingly, light of a short wavelength is mainly scattered in a region in the vicinity of the interface, the transmittance of light of a short wavelength is lower than the transmittance of light of a long wavelength, and the transmitted light gives a spectrum in which the longer wavelength side prevails.

Dependence of intensity of scattering on wavelength depends upon the degree of disturbance of orientation of the liquid crystal molecules (the area of the region in which the orientation of the liquid crystal molecules is disturbed, the degree of disturbance of the liquid crystal molecules in the above-described region or the like). The degree of disturbance of the orientation depends on both of applied voltage and anchoring effect, and therefore the transmittance of each wavelength changes depending upon applied voltage, thus changing the color tone of the transmitted light.

Therefore, when the above-described liquid crystal device is used as a light adjusting element, light with its shorter wavelength side prevailing, or light without any wavelength dependence (i.e. white light) cannot be obtained and the color tone of light cannot be made constant.

Therefore, the above-described liquid crystal device has been already reduced to practice for a display with a function of switching between two stages, opaque and transparent states, but not yet applied to a light-adjusting element sequentially adjusting light transmittance though its availability has been long expected.

Furthermore, the conventional liquid crystal device is not capable of operating in a high temperature environment of a 100°C or higher.

EP-A 0 473 090 defines an active matrix liquid crystal display element and a projection type active matrix liquid crystal display apparatus. This element comprises an active matrix substrate having an active element for each electrode for picture element, a counter electrode substrate and a liquid crystal polymer composite material in which a nematic liquid crystal having a positive dielectric anisotropy is dispersed and held in a polymer matrix. Such polymer dispersed liquid crystal devices are switched between the „clear" and the „opaque" state, a display grey scale being only vaguely mentioned in connection with a voltage-transmittance dependence.

The document WO 92/10130 is directed to a liquid crystal device having only two states (clear and opaque) can be controlled to display intermediate transmission states by controlling the duty cycle of the voltage pulses applied to the device. However, this device does not include a driving voltage applied between both conductive films which is made into a voltage waveform alternately switching between the first and second voltage states, positive-negative alternating.

SUMMARY OF THE INVENTION

The present invention was made to cope with the above-described situation, and it is an object of the invention to provide a driving method permitting sequential adjustment of the light transmittance of a liquid crystal device while keeping the distribution of spectrum of transmitted light from shifting and the color tone of transmitted light from abnormally changing, a liquid crystal apparatus employing such a driving method, an illumination apparatus incorporating such a liquid crystal apparatus, and a liquid crystal device capable of operating at a temperature of 100°C or higher and free from change of its characteristic.

A method of driving a liquid crystal device according to the present invention for solving the above-described problem is defined in claim 1.

The liquid crystal apparatus according to the invention is defined in claim 3.

Further, an illumination apparatus according to the present invention is characterized by the arrangement of the liquid crystal device of the liquid crystal apparatus as recited in claim 3 in the optical path of light projected from a light source.

Further, a liquid crystal device according to the present invention is a liquid crystal device defined in claim 9.

According to the present invention implemented by the above-described structure, since the power of non scattered light transmitted through the composite film per unit time period is determined by the ratio of the time period of the opaque state to the time period of the transparent state per unit time period, controlling the ratio of the time period of the above-described opaque state to the time period of the transparent state permits continuous adjustment of light transmittance through the composite film between the opaque state and the transparent state. Furthermore, the spectrum distribution of transmitted light is substantially identical to the transmittance spectrum in the transparent state at any of the ratios of the time period of the opaque state and the time period of the transparent state per unit time period, and therefore there is no possibility that the spectrum distribution of transmitted light shifts or the color tone of transmitted light abnormally changes depending upon the applied voltage particularly in a middle state between the opaque state and the transparent state, so that the spectrum distribution becomes substantially constant.

Further, substantially equalizing the respective spectrum distributions of the opaque state and the transparent state further reduces change in the spectrum distribution in the middle state between the opaque state and the transparent state.

Also in the liquid crystal device according to the invention implemented by the above-described structure, since the liquid crystal material of a liquid crystal phase in a temperature range of at least 100°C or higher is used and a polarizing plate poor in heat resistance is not used, responsiveness from the opaque state to the transparent state in response to applied voltage in a temperature environment of 100°C or higher is provided.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1A is a schematic view showing the structure of one embodiment of a liquid crystal apparatus according to the invention, and Fig. 1B is a schematic view showing the structure of one embodiment of an illumination apparatus according to the invention incorporating the abovedescribed liquid crystal apparatus.

Fig. 2 is a sectional view showing one example of the layered structure of liquid crystal device used for the liquid crystal apparatus in Fig. 1A.

Figs. 3A and 3B are sectional views each showing a part of the composite film of the above-described liquid element being enlarged.

Fig. 4A is a waveform chart showing the waveform of pulse shaped driving voltage applied to a liquid crystal device in a method of driving a liquid crystal device according to the invention, and Fig. 4B is a waveform chart showing the waveform of driving voltage applied to a liquid crystal device in a conventional driving method.

Fig. 5 is graph showing the relation between applied voltage and light transmittance in each wavelength in liquid crystal devices used in a specific example of the present invention and a comparison example.

Fig. 6 is a graph showing the relation between the transmittance of light having a wavelength of 600nm and the temperature of a liquid crystal device used in a specific example of the present invention.

Fig. 7 is a graph showing the relation between the responsiveness of a liquid crystal device and time under a temperature environment of 100°C.

Fig. 8 is a graph showing the relation between the Duty ratio of applied voltage and the spectrum of transmitted light in a liquid crystal apparatus in Specific Example 1.

Fig. 9 is a graph showing the relation between the voltage value of applied voltage and the spectrum of transmitted light in the liquid crystal apparatus of Comparison Example 1.

Fig. 10 is a schematic view for use in illustration of a method of measuring illuminance and color temperature in illumination apparatuses in Specific Example 2 and Comparison Example 2.

Fig. 11 is a graph showing the relation between the Duty ratio of applied voltage and the illuminance of projected light in the illumination apparatus of Specific Example 2.

Fig. 12 is a graph showing the relation between the illuminance of projected light and color temperature in the illumination apparatus of Example 2.

Fig. 13 is a graph showing the relation between the voltage value of applied voltage and the illuminance of projected light in the illumination apparatus of Comparison Example 2.

Fig. 14 is a graph showing the relation between the illuminance of projected light and color temperature in the illumination apparatus of Comparison Example 2.

## DESCRIPTION OF THE PREFERRED EMBODIMENTS

Now, the present invention will be described in conjunction with the drawings illustrating one embodiment of a liquid crystal apparatus and an illumination apparatus incorporating the liquid crystal apparatus.

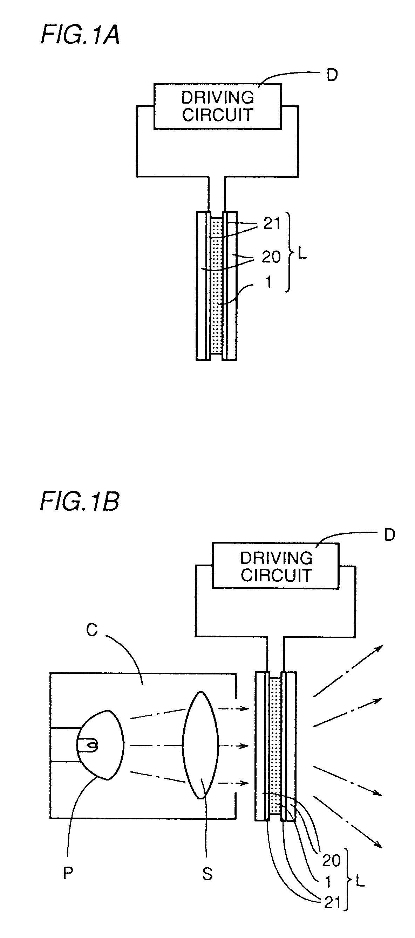

As illustrated in Fig. 1A, the liquid crystal apparatus of the embodiment is formed of a liquid crystal device L, and a driving circuit D which drives controllably this liquid crystal device L.

Further, the illumination apparatus of the embodiment as illustrated in Fig. 1B includes a light source lamp P, a lens S, and a container C for accommodating them, and is disposed in the optical path of light projected from light source lamp P as a light adjusting element. Note that in the above-described illumination apparatus, in order to protect liquid crystal device L from ultraviolet rays and infrared rays from light source lamp P a dielectric multi-layer film reflecting these lights may be provided between light source lamp P and liquid crystal device L or such a dielectric multilayer film may be piled on a surface of liquid crystal device L on the side of light source lamp P. Further, in order to increase extinction ratio, a plurality of such liquid crystal devices L may be piled for use.

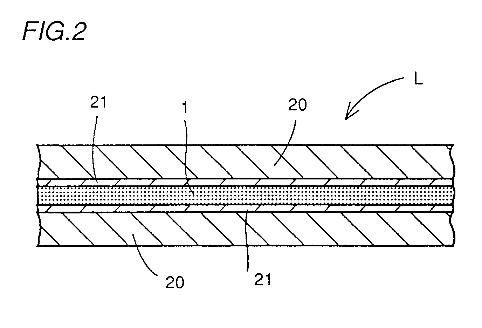

Liquid crystal device L is formed as illustrated in Fig. 2 by sandwiching a composite film 1 between a pair of transparent substrates 20, 20.

However, a transparent conductive film 21 is formed on the surface of transparent substrate 20 in contact with the composite film 1.

Glass, plastic film (polyethylenetéréphthalate (PET and polyethersulfone (PES)) or the like is used for the transparent substrate (20), while a transparent conductive film 21 may be provided by forming a conductive film such as ITO (Indium Tin Oxide) and $SnO_2$ on the surface of transparent substrate 20 by means of deposition, sputtering or coating.

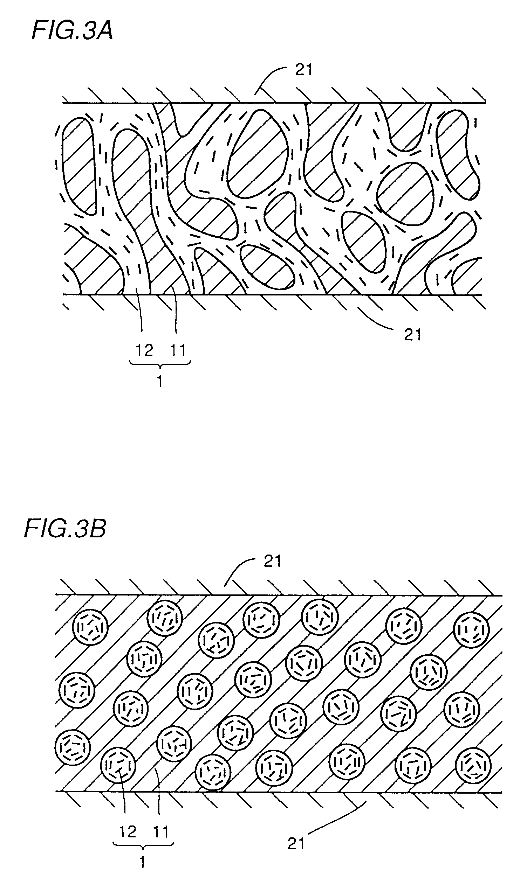

For a composite film 1, various composite films capable of switching between two stages of optical states, opaque and transparent states depending upon the state of electrical input from the above-described transparent conductive films 21, 21 may be used, and particularly as illustrated in Fig. 3A, a composite film having a liquid crystal material 12 filled in a series of pores in a film forming a transparent matrix having a sponge structure is appropriately used, or alternatively a structure in which liquid crystal material 12 is dispersed in particles in a film forming transparent matrix 11 may be employed. The composite films of these structures are formed, for example, according the following three methods.

i) When the transparent matrix is formed of a polymer, for example, a liquid having the polymer and a liquid crystal material dissolved or dispersed in a suitable solvent is applied onto the surface of one transparent substrate 20 on which transparent conductive film 21 is formed, a so-called solvent evaporation method by which the solvent is evaporated to separate the polymer and the liquid crystal material from each other to form the composite film. Then, the other transparent substrate 20 is joined onto the surface of thus formed composite film so that transparent conductive film 21 comes into contact with the composite film, and thus the liquid crystal device having the layered structure as illustrated in Fig. 2 is completed.

ii) In a suspension method, a milky mixture solution of hydrophilic polymer such as polyvinyl alcohol and a liquid crystal material is applied onto the surface of the transparent conductive film 21 of one transparent substrate 20, water in the solution is evaporated, and the liquid crystal material is dispersed in the polymer in particles to form a composite film. Then, the other transparent substrate 20 is joined onto the surface of thus formed composite film so that transparent conductive film 21 is in contact with the composite film, and thus the liquid crystal device having the layered structure as shown in Fig. 2 is completed.

iii) Further, in a polymerization-induced phase separation method, a mixture solution of polymer precursor (prepolyer), a liquid crystal material, and a polymerization initiator is injected between the transparent conductive films 21 of two transparent substrates 20, polymerization and cross-linked reactions are induced by ultraviolet rays or heat, the polymer and the liquid crystal material are separated from each other, thus a composite film having the liquid crystal material dispersed in the polymer matrix is formed and the liquid crystal device having the layered structure shown in Fig. 2 is completed.

The thickness of such a composite film must be at least as large as the wavelength of visible light in order to apply a liquid crystal device using the composite film to a system based on controlled light scattering. Too large a thickness however excessively increases the driving voltage of the element, and therefore a thickness in the range from about 10 to 30$\mu$m is appropriate in practice.

The liquid crystal material for forming the composite film is not specifically limited, but the use of the one having large refractive index anisotropy $\Delta n$ and large dielectric anisotropy $\Delta\varepsilon$ is preferable to obtain excellent characteristics. Further, for the liquid crystal material, materials demonstrating various conventionally known liquid crystal phases such as nematic liquid crystal phase, smectic liquid crystal phase, and chiralnematic liquid crystal phase may be used. For the chiralnematic liquid crystal phase, cholesteric liquid crystal as well as a mixture of usual nematic liquid crystal and a chiral component such as the above-described cholesteric liquid crystal may be used. Further, in order to provide the liquid crystal with a coloring function, conventionally known various dichroic pigments may be mixed into the liquid crystal.

However, for the above-described liquid crystal material, it is preferable to use a material having high speed responsiveness permitting operation from an opaque state to a transparent state or vice versa in response to pulse shaped voltage applied to composite film 1 according to a method of a driving a liquid crystal device according to the present invention which will be described later.

For transparent matrix 11 which is the material for the film constituting the composite film together with the above-described liquid crystal material 12, polymer is mainly used. For the polymer, the one with a high transparency to visible light is preferable, for example methacrylic polymer represented by PMMA, epoxy urethane resin or the like is preferably used. Note that the transparent matrix is not limited to polymer, and may be formed of a transparent inorganic material such as glass, or polymer having such a material dispersed therein.

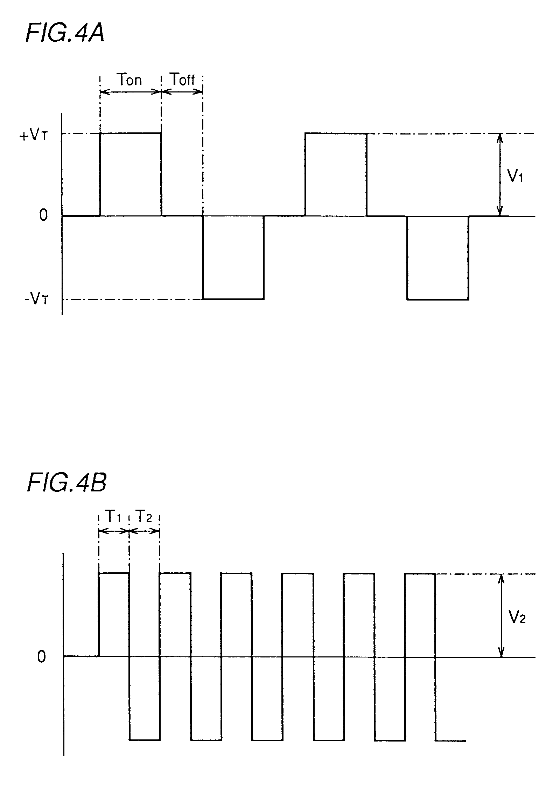

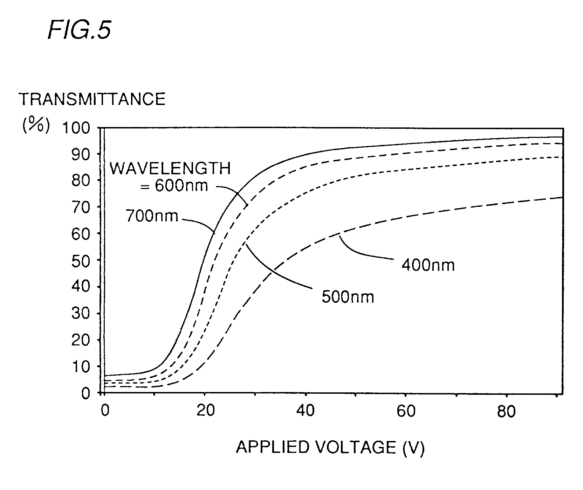

In composite film 1 of the above-described structure, the relation set forth in Fig. 5 is established between the transmittance and applied voltage. More specifically, when no voltage is applied, liquid crystal molecules are in a random state restricted by anchoring effect from the transparent matrix, and therefore composite film 1 is an opaque state with a low transmittance. However, when voltage of positive-negative alternating rectangular waveform is applied from transparent conductive film 21 for example as illustrated in Fig. 4B, liquid crystal molecules having positive dielectric anisotropy ($\Delta\varepsilon$) is oriented in the direction of electric field according to the amplitude of the applied voltage ($V_2$ in Fig. 4B). When the amplitude of voltage increases, the disturbance of the orientation decreases, the transmittance increases. If a voltage with a sufficient amplitude is applied to the composite film 1, the film shows a transparent state.

Driving circuit D is used to drive liquid crystal device L operating in accordance with the above-described principle by the driving method according to the invention, and is as illustrated in Fig. 1A electrically connected to the transparent conductive films 21, 21 of the pair of transparent substrates 20, 20 of liquid crystal device L.

Driving voltage applied across the region between transparent conductive films 21, 21 of liquid crystal device L from driving circuits D is, as illustrated in Fig. 4A pulse shaped voltage alternately switching between a first voltage state in which composite film 1 is brought into an opaque state (0V in the figure), and a second voltage state sufficient for bringing composite film 1 into the final transparent state (the state of rectangular waveform voltage positive-negative alternating at $\pm V_T$). When such pulse shaped driving voltage is applied, composite film 1 alternately repeats the opaque state and the transparent state in response, and the ratio of both states per unit time period determines the power of non-scattered light transmitted through composite film 1 per unit time period.

Accordingly, the power of non-scattered light transmitted through composite film 1 per unit time period can continuously be adjusted between the opaque state and the transparent state by inputting an external signal to driving circuit D, controlling the time period of the second voltage state. The ratio of the time period $T_{on}$ of the second voltage state to the time period $T_{off}$ of the first voltage state is referred to as Duty ratio given by the followings expression:

$$T_{on} / (T_{on} + T_{off})$$

At that time, the spectrum distribution of transmitted light is substantially identical to a transmittance spectrum in a substantially transparent state, so there is no possibility that the spectrum distribution of the transmitted light will shift and that the color tone of the transmitted light abnormally changes depending upon the applied voltage, particularly in the middle state between the opaque state and the transparent state, and therefore the spectrum distribution becomes substantially constant.

When a liquid crystal apparatus according to the invention is used for illumination for television or movie filming, the light source portion of a projecting type television receiver, a display, an indoor/outdoor illumination apparatus or other illuminations, flickers are sometimes generated if the frequency of transition between the opaque and transparent states of composite film 1 is different from the frame frequency of the above-described television apparatus or the frequency of light radiated from the light source apparatus. In order to effectively prevent such a disadvantage, frequency $f_A$ represented as $1/(T_{on}+T_{off})$ from said time periods ($T_{on}$, $T_{off}$) is set matching the frame frequency $f_C$ of the image sensing apparatus such as the above-described television apparatus, or the frequency $f_B$ of light radiated from the light source apparatus, or an integer multiple of $f_C$ or $f_B$, or alternatively the difference between $f_A$ and $f_B$ as $f_A$ and $f_C$ is set equal to or higher than the limit frequency of the flickers (a repeating number per second at the limit where the flickers are not recognized).

In order that composite film 1 repeats the opaque state and the transparent state in response to high frequency pulse alternating voltage as described above, time ($\tau_{on}$) required for switching from the opaque state of composite film 1 to the transparent state and time ($\tau_{off}$) required for switching from the transparent state to the opaque state should be shorter than said $T_{on}$ and $T_{off}$, respectively. Among them, $\tau_{on}$ depends largely on the intensity of applied electric field and is shortened as the electric field intensity increases, and therefore $\tau_{on}$ can be made shorter than $T_{on}$ by increasing the intensity of electric field applied to composite film 1.

Meanwhile, since $\tau_{off}$ has smaller dependence on electric field intensity, and therefore another measure must be considered in order to make $\tau_{off}$ shorter than $T_{off}$. Various measures can be considered for shortening $\tau_{off}$, and effective measures are, for example, ⟨1⟩to use a liquid crystal material with small viscosity and a large elasticity constant, ⟨2⟩ to enhance anchoring force of the liquid crystal transparent matrix, ⟨3⟩to reduce the size of mesh of the transparent matrix constituting the film, ⟨4⟩to use a liquid crystal material whose polarity of dielectric anisotropy changes with the frequency, and ⟨5⟩to use a cholesteric liquid crystal material as disclosed in Japanese Patent Laying-Open No. 4-119320.

Further, since the viscosity of liquid crystal is reduced as the temperature of the element increases, and $\tau_{on}$ and $\tau_{off}$ are both shortened, use of the element at a high temperature is an effective method. In an illumination apparatus according to the invention, liquid crystal device L is disposed in the optical path of light projected from a light source lamp P, and therefore the element can be heated to a temperature of 100°C or higher depending upon the intensity of beam of light passing through the liquid crystal device. In this case, it is necessary for liquid crystal device L to operate within a temperature range of 100°C or higher so that liquid crystal device L keeps normally operating.

To this end, a liquid crystal material with a liquid crystal phase within a temperature range of at least 100°C or higher, preferably 150°C or higher should be used. A liquid crystal phase such as nematic phase and cholesteric phase is preferable in this case in view of response time. Although the smectic phase liquid crystal is generally low in response time as compared to the liquid crystals with above-described two phases, the smectic phase liquid crystal may be used depending upon usage for its memory property. Material properties of liquid crystal such as refractive index anisotropy, dielectric anisotropy, viscosity, elasticity constant, and pitch length in cholesteric phase generally vary with temperatures, and therefore it is desirable to discover suitable material properties at a temperature of 100°C or higher and use a material with such properties taking into account change of the refractive index of transparent matrix or the like. Further, when an inorganic material having high-heat resistance such as glass or a polymer material is used for the transparent matrix, it is effective to use such a material with a glass transition temperature of 100°C or higher, preferably 150°C or higher, or a cross-linked polymer material.

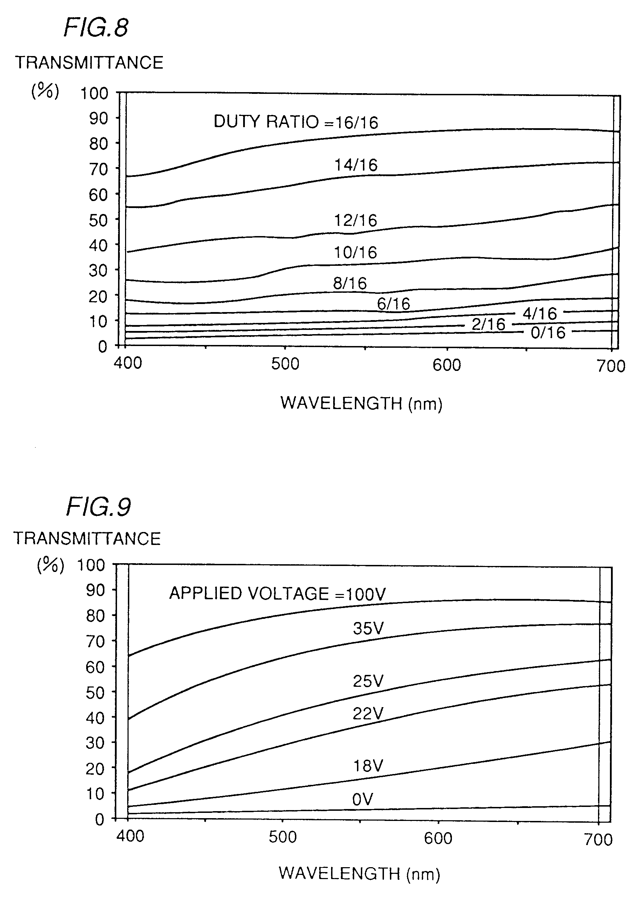

In order to equalize the respective spectrum distributions of the opaque state and the transparent state, it is appropriate to control the state of dispersion of liquid crystal in the composite film. The spectrum in the transparent state is for example, as represented by a spectrum at an applied voltage of 100V in Fig. 8, generally a spectrum near white. The composite film shows an opaque state when no voltage or voltage of a low value is applied, and the opaque state varies depending upon the state of dispersion of liquid crystal filling, in other words the shape and size of the series of pores or particles. If, for example, the grain or pore size is uniform, a selective scattering phenomenon in which light of a certain wavelength is particularly strongly scattered is sometimes encountered, which impairs the whiteness of non-scattered light and is not preferable. It would be preferable that the structure of particles or pores is appropriately uneven or the particles or pores are so sized that such selective scattering will not occur in the wavelength band of visible light.

The shape of serial pores or particle can be controlled by conditions in the manufacture. Since the size or shape of pores can be controlled for example by solvent evaporation rate in the evaporation separation method as described in the embodiment, the respective spectrum distributions of the opaque state and the transparent state can substantially be equalized, by optimizing temperature, atmospheric pressure, the kind of solvent, and the ratio of composition of a mixture solution for application. A method for optimization as such can be appropriately selected depending upon a manufacturing method of a composite film.

When a liquid crystal apparatus having the above described structure is used for a display or various illuminations, for example, in order to divide composite film 1 into a plurality of segment to be individually driven according to each display patten, the transparent conductive film 21 of transparent substrate 2 having the transparent conductive film for driving composite film 1 is patterned into a shape corresponding to the above-described segments, and driving circuit D needs only be connected so as to apply a separate driving voltage for every segment.

According to the method of driving a liquid crystal device according to the invention described above, the spectrum distribution of transmitted light can be kept substantially constant, and the transmittance of light through the liquid crystal device can be sequentially controlled.

Accordingly, when a liquid crystal apparatus according to the invention employing this driving method is used for a light-adjusting window or a display apparatus, for example, color does not shift in a middle transmittance state, and yet transmittance in the case of light-adjusting window and the density of display in the case of the display device, respectively can be sequentially and freely adjusted, which is a significant function and not found with conventional techniques.

An illumination apparatus according to the present invention incorporating the above-described liquid crystal apparatus can sequentially and freely control the power of projected light without changing the spectrum of the projected light and can therefore be used for various illuminations, such as indoor illuminations, and illuminations for television or movie filming or photographing, or for an illumination apparatus with a function of adjustment of light in a projecting type television receiver, projector, slide projector.

〈Manufacturing of Liquid Crystal Device〉

70 weight portion of a nematic liquid crystal material (phase transition temperature: 15°C for crystal layer → nematic phase transition temperature, 170°C for nematic layer → isotropic phase transition temperature; manufactured by Merk Japan), 25 weight portion of an acrylic polymer material, and 5 weight portion of a cross-linked agent (polyisocyanate: Takeda Yakuhin Kogyo, No. A-3) are dissolved into dichloromethane as a solvent to give a solute concentration of 20% and an application liquid is manufactured. The above-described acrylic polymer material is a copolymer of acrylic acid ester containing 20% by weight hydroxyethylmetacrylate as a component, and is cross-linked by a reaction of a terminal OH group of hydroxyethylmetacrylate and the cross-linking agent.

Then, the application liquid was applied onto a glass substrate, on which a transparent conductive film is formed, by a bar coat method, the solvent was evaporated in air at 1 atm., a composite film as thick as 17μm is formed, and then the solvent remaining in the composite film was removed away by heating up to a temperature of 100°C. Another glass substrate having a transparent conductive film identical to the above-mentioned glass substrate was joined onto the composite film, pressed and closely contacted under a pressure of about 1kgf/cm$^2$ to manufacture a liquid crystal device.

When a stepped voltage of 150V is applied between the pair of transparent conductive films of the above-described liquid crystal device, time until transmittance reaches 90% of a saturation transmittance was measured as response time $\tau_{on}$ for opaque state → transparent state, while when the applied voltage is 0V, time until the transmittance attenuates to 10% of the saturation transmittance was measured as response time $\tau_{off}$ for transparent state → opaque state, with the result being $\tau_{on}$=0.2msec, $\tau_{off}$=0.9msec.

With the above-described liquid crystal device being set in a spectrophotometer (Model No. UV-160 manufactured by Shimazu Seisakusho), the relation between the applied voltage and the transmittance of light having wavelengths of 400nm, 500nm, 600nm, and 700nm was measured by applying a rectangular waveform voltage of 200Hz across the region between the transparent substrates having both transparent conductive films by a manner increasing 2V by 2V from 0V. The result set forth in Fig. 5 was obtained. The ordinate in Fig. 5 indicates the transmittance of the glass substrate corrected in %, while the abscissa is the amplitude of the rectangular waveform voltage.

From the result shown in Fig. 5, the transmittance of light through the above-described liquid crystal device were all below 10% at the applied voltage of 10V or lower at any wavelength. At the applied voltage of 80V or higher, the transmittances of light of most of the wavelength were somewhere around 90% of the saturation transmittances of the respective wavelengths, in other words a transparent state. Further, the relative magnitude of transmittance of light having above-mentioned wavelength changed with voltage, and therefore it was found out that the above-described liquid crystal device has its color tone changed in response to the effective value of the applied alternating voltage.

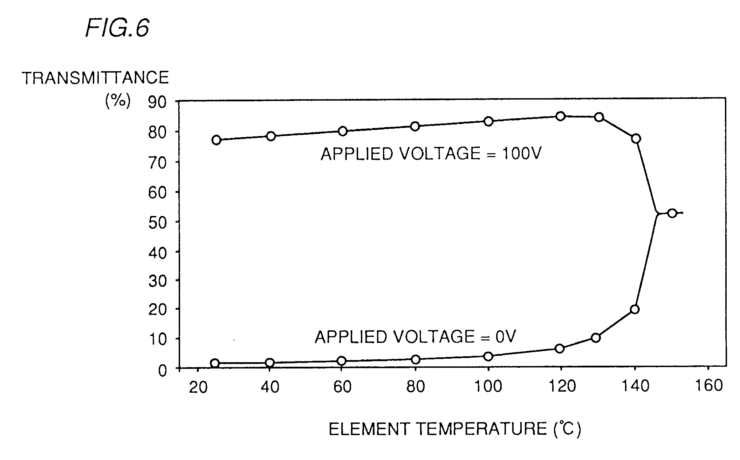

When the transmittance of the measurement light of wavelength 600nm through the liquid crystal device at the applied voltage 0V and the transmittance at the applied voltage 100V were measured while the temperature of the element was changed between 30°C and 150°C, it was found out that responsiveness for opaque/transparency in response to the applied voltage was maintained even in the temperature range in excess of 100°C and up to about 140°C as shown in Fig. 6.

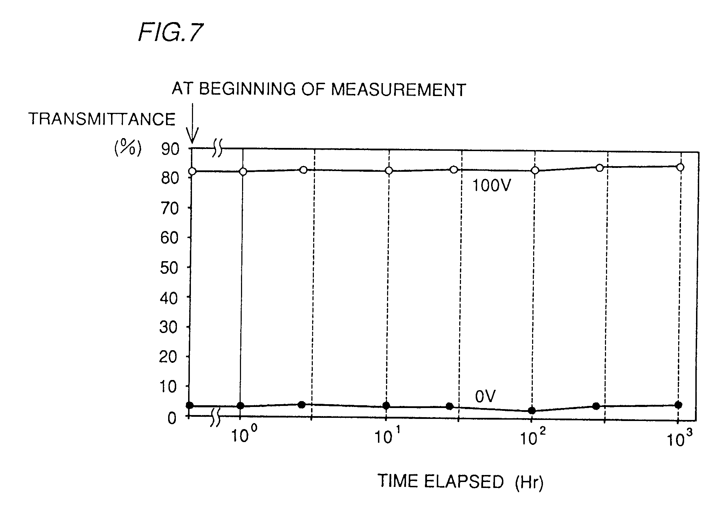

Further, when the liquid crystal device was placed under a temperature environment of 100°C and change in responsiveness was examined, as illustrated in Fig. 7, it was found out that the transmittance at the applied voltage 0V and the transmittance at the applied voltage 100V did not change after passage of 1000 hours, and therefore the element continued to have the responsiveness.

〈Specific Example 1〉

The above-described liquid crystal device was connected to a driving circuit and a liquid crystal apparatus as shown in Fig. 1A was manufactured. Then, the liquid crystal device of the liquid crystal apparatus was set in the spectrophotometer the same as the above, a pulse shaped driving voltage shown in Fig. 4A (voltage value $V_1$=150V, $T_{on}$+$T_{off}$=8.33msec, frequency 120Hz) was applied with its Duty ratio [=$T_{on}$/($T_{on}$+$T_{off}$)] being changed in a stepped manner by 2/16 between 0/16 and 16/16, and the measurement result of change of the spectrum of transmitted light was set fourth in Fig. 8.

From the result shown in Fig. 8, it was confirmed that transmittance changes as the Duty ratio is changed, but the form of the spectrum distribution of light having each transmittance hardly changes, and therefore the transmittance of light through the liquid crystal device can be adjusted while keeping the spectrum distribution almost constant according to the liquid crystal apparatus of Specific Example 1.

〈Comparison Example 1〉

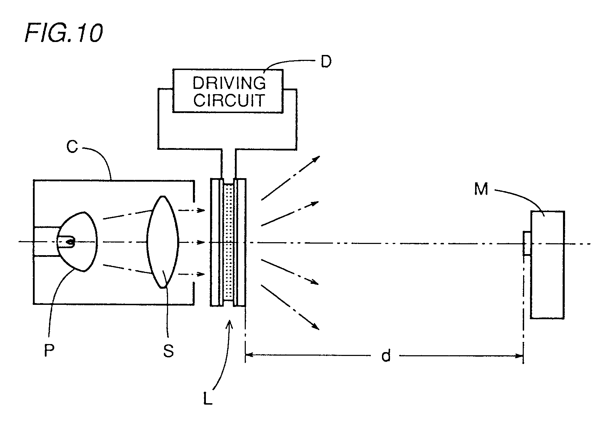

Said liquid crystal device was connected with a driving circuit generating a rectangular waveform voltage shown in Fig. 4B to manufacture a liquid crystal apparatus of Comparison Example 1. Then, the liquid crystal device of the liquid crystal apparatus was set in the same spectrophotometer as the above, a rectangular waveform voltage ($T_1$=$T_2$=2.5msec, frequency 200Hz) shown in Fig. 4B was applied with its voltage

value $V_2$ being changed, and the result of measurement of change of the spectrum of transmitted light was set forth in Fig. 9.

From the result shown in Fig. 9, it was found out that not only the transmittance changes as the voltage is changed, but also the form of the spectrum of light having each transmittance greatly changes.

〈Specific Example 2〉

The liquid crystal apparatus of said Specific Example 1 was combined with a tungsten lamp (300W) as a light source and a lens to manufacture an illumination apparatus shown in Fig. 1B. The temperature of the liquid crystal device with the lamp being lit measured using a radiation thermometer was about 100°C.

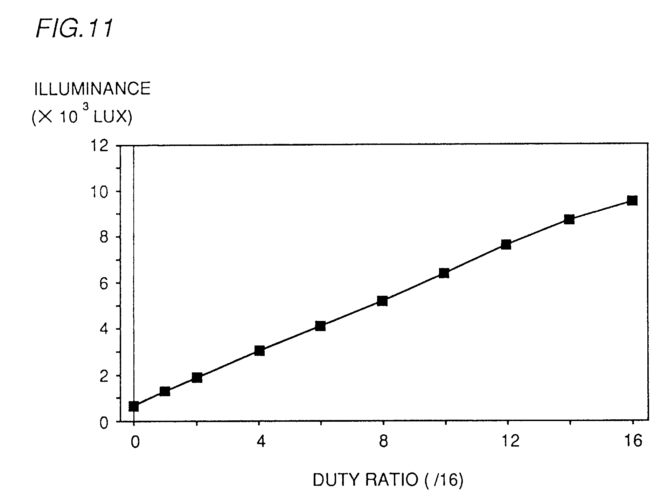

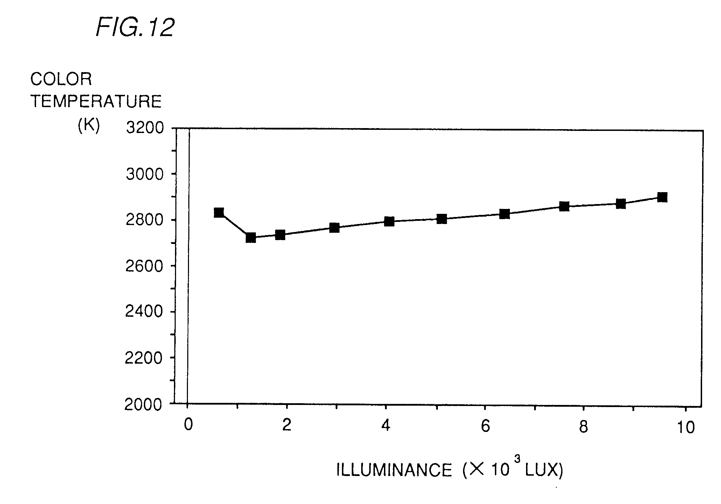

Then, a chrominance colorimeter M was disposed as illustrated in Fig. 10 in the optical path of light projected from the light source lamp in front of the illumination apparatus, a pulse shaped driving voltage the same as in said Specific Example 1 was applied on the liquid crystal device with its Duty ratio being changed in a stepped manner, and illuminance and color temperature were measured at a measuring point in the optical path of transmitted light at a distance d=1m apart from the liquid crystal device L using chrominance colorimeter M. The relation between the Duty ratio of the driving voltage and the illuminance was set forth in Fig. 11 and the relation between the illuminance and the color temperature in Fig. 12.

From the result shown in Fig. 11, the Duty ratio of the driving voltage and the illuminance were approximately in a proportional relation, which demonstrated that according to the illumination apparatus of Specific Example 2, the illuminance of the projected light can be controlled by changing the Duty ratio of the driving voltage. Further, from the result shown in Fig. 12, the color temperature of the projected light hardly changed even if the illuminance was changed, and therefore it was found out that according to the illumination apparatus of Specific Example 2 the power of projected light can be controlled without changing the spectrum of the projected light.

〈Comparison Example 2〉

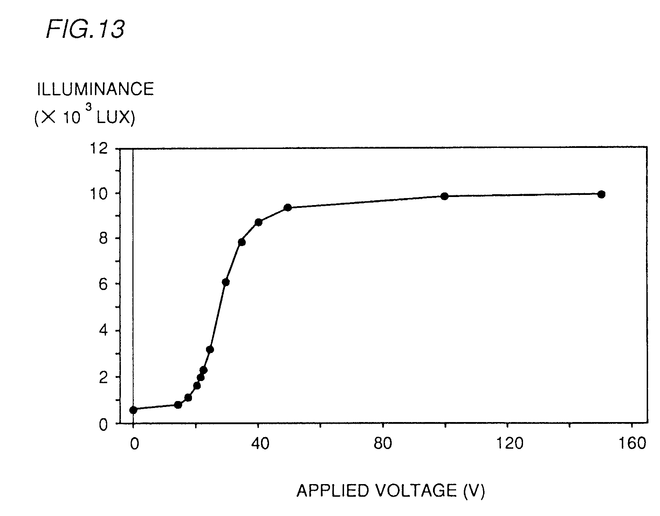

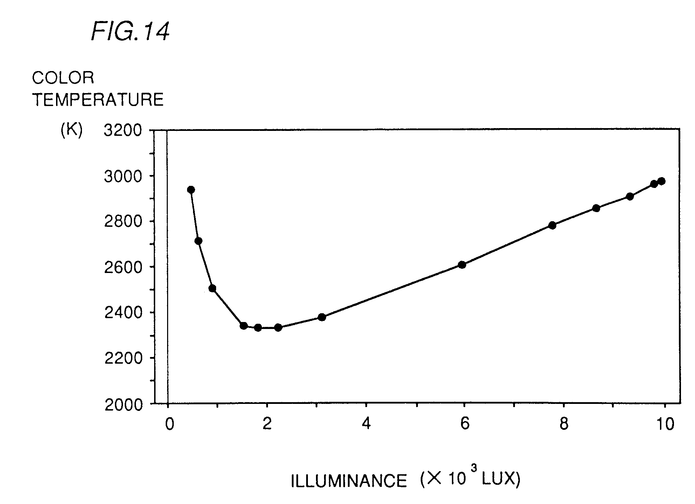

The liquid crystal apparatus of said Comparison Example 1 was combined with a tungsten lamp (300W) as a light source and a lens to manufacture an illumination apparatus. A chrominance colorimeter M was disposed in the optical path of light projected from the light source lamp in front of the illumination apparatus, a rectangular waveform voltage the same as in said Comparison Example 1 was applied to the liquid crystal device with its voltage value $V_2$ being changed, and illuminance and color temperature were measured at the same measuring point as Specific Example 2 using chrominance colorimeter M. The relation between the voltage value of applied voltage and the illuminance is set forth in Fig. 13, and the relation between the illuminance and color temperature in Fig. 14.

From the result shown in Fig. 13, it was found that the illuminance of projected light can be controlled by changing the voltage value of applied voltage, but the spectrum of the projected light changes as well.

As have been described in detail, the liquid crystal device according to the invention can continue to have responsiveness in a high temperature environment of 100°C or higher, and according to the method of driving a liquid crystal device according to the invention, the transmittance of light through the liquid crystal device can be controlled while keeping the spectrum distribution of the transmitted light almost constant. According to the liquid crystal apparatus according to the invention employing the above-described driving method, when the apparatus is used for a light-adjusting window or a display, for example, no color shift causes in the state of intermediate transmittance, and yet the transmittance in the case of light-adjusting window and the density of display in the case of the display can be continuously and freely adjusted. Furthermore, the illumination apparatus of the present invention incorporating the above-described liquid crystal apparatus, the power of projected light can be continuously and freely controlled without changing the spectrum of the projected light. Accordingly, the illumination apparatus according to the invention can be used for various illuminations, indoor illuminations, illuminations for television or movie filming or photographing, or alternatively for a projecting type television receiver, a projector, a slide projector or the like.

## Claims

1. A method of driving a liquid crystal device (L) having a composite film (1) in which a liquid crystal material (12) fills a series of pores in a carrier film (ll) forming a transparent matrix having a three-dimensional network structure or in which liquid crystal (12) is dispersed in particles in a film (11) forming a transparent matrix, and substrates (20, 20) having a pair of conductive films (21, 21) sandwiching the composite film therebetween, at least one of said substrates being a transparent substrate having a transparent conductive film, **characterized in that**

   a driving voltage applied between the above-described both conductive films (21, 21) is made into a voltage waveform alternately switching between first and second voltage states, positive-negative alternating, causing the composite film (1) to attain an opaque state and a transparent state, respectively, the ratio of the time period of the opaque state to the time period of the transparent state of the composite film (1) per unit time period is changed, so that the power of non-scattered light transmitted through the composite film (1) per unit time period is controlled without substantially changing spectral intensity distribution.

2. A method of driving a liquid crystal device as recited in claim 1, wherein the device is used together with a light source apparatus (P) and/or an image sensing apparatus, and the repeating frequency $f_A$ of the opaque state and the transparent state induced in the liquid crystal device (L) is equal to the frequency $f_B$ of bright and dark cycles of light in said light source apparatus or the frame frequency $f_C$ of said image sensing apparatus, or $f_A$ takes a value equivalent to an integral multiple of $f_B$ or $f_C$, or the difference between $f_A$ and $f_B$ or $f_A$ and $f_C$ is equal to or larger than the critical flicker frequency.

3. A liquid crystal apparatus, comprising:

   a liquid crystal device (L) having a composite film (1) in which a liquid crystal material (12) fills a series of pores in a film (11) forming a transparent matrix having a three-dimensional structure or in which a liquid crystal material (12) is dispersed in particles in a film (11), substrates (20, 20) having a pair of transparent conductive films (21, 21) sandwiching the composite film therebetween; and a driving circuit (D) for applying a voltage waveform to said conductive films **characterized in that** said driving circuit is adapted such that the voltage waveform is alternately switched between first voltage states and second voltage states positive and negative alternating in which the composite film (1) attains an opaque state and a transparent state, respectively, and that the ratio of the time period of the opaque state to the time period of the transparent state of the composite film (1) per unit time period is changed by changing the time period of both voltage states with an externally applied signal, thereby controlling the power of non-scattered light transmitted through the composite film (1) per unit time period.

4. A liquid crystal apparatus as recited in claim 3, wherein the composite film (1) is formed so that the respective spectral intensity distribution of the opaque state and the transparent state are substantially equal.

5. A liquid crystal apparatus as recited in claim 3, further comprising a light source apparatus (P) and/or an image sensing apparatus , wherein the repeating frequency $f_A$ of the opaque state and the transparent states induced in the liquid crystal device (L) is equal to the frequency $f_B$ of bright and dark cycles of light in said light source apparatus or the frame frequency $f_A$ of said image sensing apparatus, or $f_A$ takes a value equivalent to an integral multiple of $f_B$ or $f_C$, or alternatively the difference between $f_A$ and $f_B$ or $f_A$ and $f_C$ is set equal to or larger than the critical flicker frequency, or setting thereof is made in response to an externally applied signal.

6. A liquid crystal apparatus as recited in claim 3, wherein the transparent conductive film (21) is patterned so as to divide the surface of the liquid crystal device into a plurality of segments driven individually, and the driving circuit (D) is provided to apply a separate driving voltage to each segment.

7. An illumination apparatus comprising a light source (P) and a liquid crystal device (L) in a liquid crystal apparatus as recited in claim 3 which is disposed in the optical path of light projected from said light source (P).

8. A liquid crystal apparatus as recited in claim 3, wherein the liquid crystal material (12) in the liquid crystal device (L) shows a liquid crystal phase at a temperature of at least 100°C or higher.

9. A liquid crystal device (L) having a composite film in which a liquid crystal material (12) fills a series of pores in a film forming a transparent matrix having a three-dimensional network structure, or in which a liquid crystal material (12) is dispersed in particles in a film (11) forming a transparent matrix, substrates (20, 20) having a pair of conductive films (21, 21) sandwiching the composite film therebetween, at least one of said substrates being a transparent substrate having a transparent conductive film, and a driving circuit (D) for applying a voltage waveform between said pair of conductive films, **characterized in that** the liquid crystal material (12) shows a liquid crystal phase at a temperature of at least 100°C or higher and can be switched from the opaque state to the transparent state in response to the voltage applied between said conductive films (21, 21) in a temperature range of 100°C or higher, said driving circuit is adapted to apply a driving voltage having a voltage waveform alternately switching between first and second voltage states, positive-negative alternating, causing the composite film (1) to attain an opaque state and a transparent state, respectively, the ratio of the time period of the opaque state to the time period of the transparent state of the composite film (1) per unit time period is changed, so that the power of non-scattered light transmitted through the composite film (1) per unit time period is controlled without substantially changing spectral intensity distribution.

10. A liquid crystal device as recited in claim 9, wherein said transparent matrix (11) is a cross-linked polymer material.

**Patentansprüche**

1. Verfahren zum Aussteuern einer Flüssig-Kristalleinrichtung (L), die einen zusammengesetzten Film (1) aufweist, in dem ein Flüssig-Kristall-Material (12) eine Reihe von Poren in einem Trägerfilm (11) auffüllt, wodurch eine lichtdurchlassige Matrix gebildet wird, die eine dreidimensionale Netzwerkstruktur aufweist, oder in dem Flüssig-Kristall (12) in Partikeln in einem Film (11) dispergiert wird, wodurch eine lichtdurchlässige Matrix gebildet wird, und wobei die Flüssig-Kristalleinrichtung (L) Substratflächen (20, 20) aufweist, die ein Paar von leitenden Filmen (21, 21) aufweisen, die den zusammengesetzten Film zwischen sich einschließen, wobei wenigstens eine der Substratflächen eine lichtdurchlässige Substratfläche ist, die einen lichtdurchlässigen, leitenden Film aufweist, dadurch gekennzeichnet, daß eine Steuerspannung, die zwischen den oben beschriebenen beiden leitenden Filmen (21, 21) anliegt, in eine Spannungs-Wellenform gebracht wird, welche alternierend zwischen ersten und zweiten Spannungszuständen umschaltet, und zwar positiv-negativ alternierend, wodurch der zusammengesetzte Film (1) veranlaßt wird, einen nicht lichtdurchlässigen bzw. einen lichtdurchlässigen Zustand anzunehmen, wobei das Verhältnis der Zeitdauer des nicht lichtdurchlässigen Zustandes zu der Zeitdauer des lichtdurchlässigen Zustandes des zusammengesetzten Filmes (1) während einer Zeiteinheit derart verändert wird, so daß die Energie des nicht gestreuten Lichtes, das während der Zeiteinheit durch den zusammengesetzten Film (1) geführt wird, ohne eine wesentliche Veränderung der spektralen Intensiätsverteilung ausgesteuert werden kann.

2. Verfahren zur Aussteuerung einer Flüssig-Kristalleinrichtung nach Anspruch 1, worin die Einrichtung zusammen mit einer Lichtquelleneinrichtung (P) und/oder einer bildabtastenden Einrichtung verwendet wird, und die Wiederhol-Frequenz $f_A$ des nicht lichtdurchlässigen Zustandes und des lichtdurchlässigen Zustandes, die in der Flüssig-Kristalleinrichtung (L) erzeugt wird, gleich ist zu der Frequenz $f_B$ von hellen und dunklen Perioden des Lichtes in der Lichtquelleneinrichtung oder zu der Bildwechsel-Frequenz $f_C$ der bildabtastenden Einrichtung, oder die Frequenz $f_A$ nimmt einen Wert an, der gleichwertig zu einem ganzzahligen Vielfachen der Frequenz $f_B$ oder $f_C$ ist, oder die Differenz zwischen der Frequenz $f_A$ und $f_B$ oder $f_A$ und $f_C$ ist gleich oder größer als die kritische Flimmer-Frequenz.

3. Eine Flüssig-Kristalleinrichtung, die folgendes umfaßt:

   eine Flüssig-Kristalleinrichtung (L), die einen zusammengesetzten Film (1) aufweist, in welchem ein Flüssig-Kristallmaterial (12) eine Reihe von Poren in einem Film (11) auffüllt, wodurch eine lichtdurchlässige Matrix gebildet wird, die eine dreidimensionale Struktur aufweist, oder in dem ein Flüssig-Kristallmaterial (12) in Partikeln in einem Film (11) dispergiert wird, Substratflächen (20, 20), die ein Paar von lichtdurchlässigen, leitenden Filmen (21, 21) aufweisen, die den zusammengesetzten Film zwischen sich einschließen; und eine Steuerschaltung (D) zum Anlegen einer Spannungs Wellenform zu den leitenden Filmen, dadurch gekennzeichnet, daß die Steuerschaltung (D) dazu dient, daß sie alternierend zwischen ersten Spannungszuständen und zweiten Spannungszuständen umgeschaltet wird, und zwar positiv und negativ alternierend, wodurch bei dem zusammengesetzten Film (1) ein nicht lichtdurchlässiger Zustand bzw. ein lichtdurchlässiger Zustand angenommen wird, und wobei das Verhältnis der Zeitdauer des nicht lichtdurchlässigen Zustandes zu der Zeitdauer des lichtdurchlässigen Zustandes des zusammengesetzten Filmes während der Zeiteinheit veränderlich ist, und zwar über ein Verändern der Zeitdauer von beiden Spannungszuständen mit einem extern angelegten Signal, wodurch die Energie des nicht gestreuten Lichtes, das während der Zeiteinheit durch den zusammengesetzten Film (1) geführt wird, gesteuert werden kann.

4. Eine Flüssig-Kristalleinrichtung nach Anspruch 3, worin der zusammengesetzte Film (1) derart gestaltet ist, daß die entsprechende spektrale Intesitätverteilung des nicht lichtdurchlässigen Zustandes und des lichtdurchlässigen Zustandes im wesentlichen gleich ist.

5. Eine Flüssig-Kristalleinrichtung nach Anspruch 3, die weiterhin eine Lichtquelleneinrichtung (P) und/oder eine bildabtastende Einrichtung aufweist, worin die Wiederhol-Frequenz $f_A$ des nicht lichtdurchlässigen Zustandes und des lichtdurchlässigen Zustandes, die in der Flüssig-Kristalleinrichtung (L) erzeugt worden ist, gleich ist zu der Frequenz $f_B$ von hellen und dunklen Perioden des Lichtes in der Lichtquelleneinrichtung oder zu der Bildwechsel-Frequenz $f_C$ der bildabtastenden Einrichtung, oder die Frequenz $f_A$ nimmt einen Wert an, der gleichwertig zu einem ganzzahligen Vielfachen der Frequenz $f_B$ oder $f_C$ ist, oder alternativ wird die Differenz zwischen der Frequenz $f_A$ und $f_B$ oder $f_A$ und $f_C$ gleich oder größer als die kritische Flimmerfrequenz gesetzt, oder ein Setzen davon wird als Antwort zu einem extern angelegten Signal hervorgerufen.

6. Flüssig-Kristalleinrichtung nach Anspruch 3, worin der lichtdurchlässige, leitende Film (21) derart gemustert ist, um die Oberfläche der Flüssig-Kristalleinrichtung in eine Vielzahl von individuell ausgesteuerten Bereichen zu unterteilen, und die Steuerschaltung (D) ist dazu vorgesehen, um eine separate Steuerspannung zu jedem Bereich anzulegen.

7. Beleuchtungseinrichtung, die eine Lichtquelle (P) umfaßt, und eine Flüssig-Kristalleinrichtung (L) in einer Flüssig-Kristalleinrichtung nach Anspruch 3, welche in dem optischen Pfad des von der Lichtquelle (P) projezierten Lichtes angeordnet ist.

8. Flüssig-Kristalleinrichtung nach Anspruch 3, worin das Flüssig-Kristallmaterial (12) in der Flüssig-Kristalleinrichtung (L) eine Flüssig-Kristallphase bei einer Temperatur von wenigstens 100° C oder höher zeigt.

9. Flüssig-Kristalleinrichtung (L), die einen zusammengesetzten Film aufweist, in dem ein Flüssig-Kristallmaterial (12) einer Reihe von Poren in einem Film auffüllt, der eine lichtdurchlässige Matrix bildet, die eine dreidimensionale Netzwerkstruktur aufweist, oder in den ein Flüssig-Kristallmaterial (12) in Partikeln in einen Film (11) dispergiert werden, wodurch eine lichtdurchlässige Matrix gebildet wird, und die Substratflächen (20, 20) aufweist, die ein Paar von leitenden Filmen (21, 21) aufweisen, die den zusammengesetzten Film zwischen sich einschließen, wobei wenigstens eine der Substratflächen eine lichtdurchlässige Substratfläche ist, die einen lichtdurchlässigen, leitenden Film aufweist, und eine Steuerschaltung (D) zum Anlegen einer Spannungs-Wellenform zwischen den Paaren der leitenden Filme, dadurch gekennzeichnet, daß das Flüssig-Kristallmaterial (12) eine Flüssig-Kristallphase bei einer Temperatur von wenigstens 100° C oder höher zeigt, und das von dem nicht lichtdurchlässigen Zustand zu dem lichtdurchlässigen Zustand als Antwort zu der Spannung umgeschaltet werden kann, die zwischen den leitenden Filmen (21, 21) in einem Temperaturbereich von 100° C oder höher angelegt wird, wobei die Steuerschaltung dazu dient, eine Steuerspannung anzulegen, die eine Spannungs-Wellenform aufweist, die alternierend zwischen ersten und zweiten Spannungszuständen umschaltet, und zwar positiv-negativ alternierend, wodurch der zusammengesetzte Film dazu veranlaßt wird, einen nicht lichtdurchlässigen Zustand bzw. einen lichtdurchlässigen Zustand anzunehmen, wobei das Verhältnis der Zeitdauer des nicht lichtdurchlässigen Zustandes zu der Zeitdauer des leihtdurchlässigen Zustandes des zusammengesetzten Filmes (1) während der Zeiteinheit in der Weise veränderbar ist, so daß die Energie des nicht gestreuten Lichtes, das während der Zeiteinheit durch den zusammengesetzten Film geführt wird, ohne ein wesentliches Verändern der spektralen Intensitätsverteilung gesteuert wird.

10. Flüssig-Kristalleinrichtung nach Anspruch 9, worin die lichtdurchlässige Matrix (11) ein quervernetztes Polymermaterial ist.

**Revendications**

1. Procédé d'excitation d'un dispositif à cristal liquide (L) possédant une pellicule composite (1) dans laquelle un matériau à cristal liquide (12) remplit une série de pores ménagés dans une pellicule de support (11) formant une matrice transparente qui possède une structure de réseau tridimensionnelle ou dans laquelle le cristal liquide (12) est dispersé en particules dans une pellicule (11) formant une matrice transparente, et des substrats (20, 20) qui possèdent une paire de pellicules conductrices (21, 21) prenant entre elles en sandwich la pellicule composite, au moins l'un desdits substrats étant un substrat transparent qui possède une pellicule conductrice transparente, caractérisé en ce que :

une tension d'excitation appliquée entre les deux pellicules conductrices ci-dessus indiquées (21, 21) est réalisée sous la forme d'une forme d'onde de tension commutant alternativement entre des premiers et des deuxièmes états de tension, en alternance positifs et négatifs, ce qui amène la pellicule composite (1) à atteindre respectivement un état opaque et un état transparent, et en ce qu'on modifie le rapport de la durée de l'état opaque à la durée de l'état transparent de la pellicule composite (1) par période de temps unité, de sorte que la puissance de la lumière non diffusée qui est transmise au travers de la pellicule composite (1) par période de temps unité est commandée sans sensiblement modifier la distribution d'intensité spectrale.

2. Procédé d'excitation d'un dispositif à cristal liquide selon la revendication 1, où le dispositif est utilisé avec un appareil source de lumière (P) et, ou bien, un appareil de détection d'image, et la fréquence de répétition $F_A$ de l'état opaque et de l'état transparent induits dans le dispositif à cristal liquide (L) est égale à la fréquence $f_B$ de cycles d'éclairement et d'obscurité de la lumière dans ledit appareil source de lumière ou à la fréquence de trame $f_C$ dudit appareil de détection d'image, ou bien $f_A$ prend une valeur équivalente à un multiple entier de $f_B$ ou $f_C$, ou bien encore la différence entre $f_A$ et $f_B$ ou entre $f_A$ et $f_C$ est égale ou supérieure à la fréquence de scintillement critique.

3. Appareil à cristal liquide, comprenant :

un dispositif à cristal liquide (L) possédant une pellicule composite (1) dans laquelle un matériau à cristal liquide (12) remplit une série de pores ménagés dans une pellicule (11) qui forme une matrice transparente ayant une structure tridimensionnelle ou dans laquelle un matériau à cristal liquide (12) est dispersé en particules dans une pellicule (11), des substrats (20, 20) qui possèdent une paire de pellicules conductrices transparentes (21, 21) prenant entre elles en sandwich la pellicule composite, et un circuit d'excitation (D) servant à appliquer une forme d'onde de tension auxdites pellicules conductrices, caractérisé en ce que :
ledit circuit d'excitation est conçu de façon que la forme d'onde de tension commute alternativement entre des premiers états de tension et des deuxièmes états de tension positifs et négatifs en alternance, dans lesquels la pellicule composite (1) atteint respectivement un état opaque et un état transparent, et que le rapport de la durée de l'état opaque à la durée de l'état transparent de la pellicule composite (1) par période de temps unité est modifiée par variation de la durée des deux états de tension au moyen d'un signal appliqué depuis l'extérieur, de manière à commander la puissance de la lumière non diffusée transmise au travers de la pellicule composite (1) par période de temps unité.

4. Appareil à cristal liquide selon la revendication 3, où la pellicule composite (20) est formée de façon que les distributions d'intensité spectrale respectives de l'état opaque et de l'état transparent sont sensiblement égales.

5. Appareil à cristal liquide selon la revendication 3, comprenant en outre un appareil source de lumière (P) et, ou bien, un appareil de détection d'image, où la fréquence de répétition $f_A$ de l'état opaque et de l'état transparent induits dans le dispositif à cristal liquide (L) est égale à la fréquence $f_B$ de cycles d'éclairement et d'obscurité de la lumière dans ledit appareil source de lumière ou à la fréquence de trame $f_C$ dudit appareil de détection d'image, ou bien $f_A$ prend une valeur équivalente à un multiple entier de $f_B$ ou $f_C$, ou bien encore, selon une autre possibilité, la différence entre $f_A$ et $f_B$ ou entre $f_A$ et $f_C$ est fixée égale ou supérieure à la fréquence de scintillement critique, ou bien son positionnement est effectué en réponse à un signal appliqué depuis l'extérieur.

6. Appareil à cristal liquide selon la revendication 3, où la pellicule conductrice transparente (21) présente des motifs de nature à diviser la surface du dispositif à cristal liquide en une pluralité de segments individuellement excités, et le circuit d'excitation (D) est prévu pour appliquer une tension d'excitation distincte à chaque segment.

7. Appareil d'éclairement comprenant une source de lumière (P) et un dispositif à cristal liquide (L) se trouvant dans un appareil à cristal liquide tel que décrit dans la revendication 3, qui est disposé dans le trajet optique de la lumière projeté depuis ladite source de lumière (P).

8. Appareil à cristal liquide selon la revendication 3, où le matériau à cristal liquide (12) se trouvant dans le dispositif à cristal liquide (L) présente une phase de cristal liquide à une température d'au moins 100°C ou plus.

9. Dispositif à cristal liquide (L) possédant une pellicule composite dans laquelle une matière à cristal liquide (12) remplit une série de pores ménagés dans une pellicule qui forme une matrice transparente ayant une structure de réseau tridimensionnelle, ou dans laquelle un matériau à cristal liquide (12) est dispersé en particules dans une pellicule (11) formant une matrice transparente, des substrats (20, 20) qui possèdent une paire de pellicules conductrices (21, 21) prenant entre elles en sandwich la pellicule composite, au moins l'un desdits substrats étant un substrat transparent qui possède une pellicule conductrice transparente, et un circuit d'excitation (D) servant à appliquer une forme d'onde de tension entre lesdites deux pellicules conductrices, caractérisé en ce que :

ledit matériau à cristal liquide (12) présente une phase de cristal liquide à une température d'au moins 100°C ou plus et peut commuter de l'état opaque à l'état transparent en réponse à la tension appliquée entre lesdites pellicules conductrices (21, 21) dans un intervalle de température de 100°C ou plus, ledit circuit d'excitation est conçu pour appliquer une tension d'excitation possédant une forme d'onde de tension qui commute alternativement entre des premiers et deuxièmes états de tension, en alternance positifs et négatifs, ce qui amène la pellicule composite (1) à atteindre respectivement un état opaque et un état transparent, et le rapport de la durée de l'état opaque à la durée de l'état transparent de la pellicule composite (1) par période de temps unité est modifié, de sorte que la puissance de la lumière non diffusée transmise au travers de la pellicule composite (1) par période de temps unité est commandée sans qu'il y ait sensiblement de modification de la distribution d'intensité spectrale.

10. Dispositif à cristal liquide selon la revendication 9, où ladite matrice transparente (11) est une matière polymère réticulée.

*FIG.1A*

DRIVING
CIRCUIT — D

21
20 } L
1

*FIG.1B*

DRIVING
CIRCUIT — D

C

P          S

20
1  } L
21

*FIG.2*

## FIG.3A

## FIG.3B

EP 0 625 720 B1

## FIG.4A

## FIG.4B

17

## FIG.5

FIG.6

EP 0 625 720 B1

## FIG.7

AT BEGINNING OF MEASUREMENT

TRANSMITTANCE (%)

TIME ELAPSED (Hr)

## FIG.8

TRANSMITTANCE

WAVELENGTH (nm)

## FIG.9

TRANSMITTANCE

WAVELENGTH (nm)

FIG.10

DRIVING
CIRCUIT

D

C

M

P

S

L

d

*FIG.11*

ILLUMINANCE
($\times 10^3$ LUX)

DUTY RATIO ( /16)

EP 0 625 720 B1

## FIG.12

COLOR TEMPERATURE (K) vs ILLUMINANCE ($\times 10^3$ LUX)

EP 0 625 720 B1

FIG.13

ILLUMINANCE
($\times 10^3$ LUX)

APPLIED VOLTAGE (V)

EP 0 625 720 B1

## FIG.14

COLOR
TEMPERATURE

ILLUMINANCE $(\times 10^3 \text{LUX})$